# EUROPEAN PATENT SPECIFICATION

(11) **EP 3 724 873 B1**
(45) Date of publication and mention of the grant of the patent: **12.10.2022**
(21) Application number: 18815648.3
(22) Date of filing: 06.12.2018
(51) Int. Cl.: G10H 1/00, G10H 1/40

(54) **SYSTEM AND METHOD FOR CREATION AND RECREATION OF A MUSIC MIX, COMPUTER PROGRAM PRODUCT AND COMPUTER SYSTEM**
SYSTEM UND VERFAHREN ZUR ERZEUGUNG UND WIEDERHERSTELLUNG EINER MUSIKMISCHUNG, COMPUTERPROGRAMMPRODUKT UND COMPUTERSYSTEM
SYSTÈME ET PROCÉDÉ DE CRÉATION ET DE RECRÉATION D'UN MIXAGE DE MUSIQUE, PRODUIT PROGRAMME D'ORDINATEUR ET SYSTÈME INFORMATIQUE

(30) Priority: 11.12.2017 SE 1730340
(43) Date of publication of application: 21.10.2020
(73) Proprietor: 100 Milligrams Holding AB, 111 40 Stockholm (SE)
(72) Inventor: STADLER, Svante, 118 69 Stockholm (SE); WALLNER, Daniel, 192 69 Sollentuna (DE)
(74) Representative: Herbjørnsen, Rut
(86) International application number: PCT/EP2018/083751
(87) International publication number: WO 2019/115333

(56) References cited:
- WO-A1-2009/001202
- WO-A1-2009/138425
- US-A1- 2010 132 536

## Description

### Technical Field

The present invention relates to a system and a method for creation and playback, or recreation, of a music mix, computer program products and computer systems for performing the methods.

### Background

WO2009138425 facilitates the remix of audio files by analyzing the audio file to define reference time points, position of starting points within the track, segments ( based on e.g. periodograms ), patterns (e.g. the amplitude peaks are in a certain pattern): All the information about these items are stored in a "mix instruction file". Then the patterns are used to align the files, for use in a re-mix based on the "mix instruction file", by taking into account by cross correlation timing differences between variant audio files representing the same audio content. The cross-correlation is performed on a vector signal that is strongly down-sampled compared to the audio signal. Disc jockeys have been able to mix recorded music tracks together for many years, to manipulate the sound and to make transitions between music tracks to create a unique mix of sounds. Originally, a disc jockey would work with gramophone records. It has been possible for many years to create digital DJ mixes by means of computers and to store them electronically. The first digital mixes contained both the music tracks and the effects applied to them. Sharing such tracks was problematic both technically and legally. Such a mix track could be very large and take a long time to transmit. Also, the sharing of music tracks caused copyright problems as the creator of the mix often was not allowed to share the music tracks used in the mix.

These two problems are solved by the method proposed in EP 2036089 to create a DJ mix by creating a mix instructions track which does not contain the music tracks themselves but only information related to which music tracks to play when and how to manipulate them.

Anyone can play back the mix, as long as the correct music tracks are available. Today, these music tracks can be retrieved, for example, from streaming services such as Spotify or Apple Music, or from private databases.

It is a problem that the same music track can be found in different tracks with different properties, in particular different offsets in time (that is, the music starts at different times within the track but is otherwise identical) and/or gain. EP 2304726 proposes a method of comparing two music tracks having the same audio content but starting at different points in time within the tracks to handle any difference in timing so that the resulting mix will be independent of which music track is used.

In addition to the same version being stored in slightly different files, there may also be several different versions of the same song, even by the same performer, recorded at different times, live or in the studio, etc. In some cases, for example, a provider of music tracks or streaming service will provide different versions of the same song as the default version in different parts of the world. The tracks may differ not only in the timing but in the actual audio content, for example, tempo, instrumentation, gain and balance.

There is a desire to enable the use of a track comprising a first version of a music piece in a mix that was created using a second version of the music piece.

At the same time music mixes are often played on small units such as smartphones or tablets. Such units typically have limited CPU capacity and often connect to the Internet using connections of limited bandwidth or limitations on the amount of data that may be downloaded. Also, they are often battery driven and there is a desire to keep the current consumption as low as possible.

It is an object of the present invention to recreate a music mix using potentially different versions of the tracks' audio data, in particular in a way that is feasible for use with a mobile phone or tablet.

### Summary of the Invention

The invention relates to a method of recreating a music mix based on a mix instructions file, wherein the mix instructions file comprises information identifying at least one creation music track, waveform data related to the creation music track, and control information controlling the playback of the at least one creation music track, said method comprising
a. Providing a consumption audio music track to be controlled by the control information
b. Obtaining waveform data related to the consumption music track
c. Comparing waveform data related to the consumption music track to the waveform data related to the creation music track
d. Depending on the result of the comparison, deciding whether to use the consumption music track when reconstructing the music mix,
e. If the decision in step d is positive, reconstructing the music mix by applying the control information to the consumption music track.

Hence, the method of recreating a music mix enables a comparison of the consumption music track with the creation music track used to create the mix, to determine if the consumption music track is similar enough to the creation music track that it can be used in the music mix and generate the same or acceptably similar output result as the creation music track.

According to one embodiment, the method further comprises the steps of
- Determining an adjustment of timing and/or gain to be applied to the consumption music track to compensate for a difference between the creation music track and the consumption music track, and
- Applying the adjustment to the consumption music track before using it to reconstruct the music mix

This will enable the use, when recreating the mix, of consumption music tracks that are similar but not identical to the creation music tracks, by adjusting the consumption music track for correctable differences. Such correctable differences may typically be offsets in timing or gain.

The mix instructions file preferably comprises information about at least one synchronization point defined for the creation music track and the method comprises the step of searching for at least one point in the consumption music track that is similar to the at least one synchronization point in the creation music track. This simplifies the comparison. Especially, the synchronization points should be selected at portions of the creation music tracks where the waveform is easily distinguishable from other portions of the same track. Even in highly repetitive music, there are at least two distinctive portions: the beginning and the end. Choosing distinguishable portions will minimize the risk of false matches.

Waveform data encompasses any representation of the distribution of acoustic energy over time and/or frequency.

The comparison of the waveform data may further include the steps of providing mix integrity data related to the position of at least one transient in the creation music track, identifying a corresponding transient in the consumption music track and comparing the positions of the transient in the two music tracks.

Additionally, or alternatively, the comparison of the waveform data may further include the steps of providing mix integrity data related to the spectrotemporal energy distribution of a portion of the creation music track and comparing it to the spectrotemporal energy distribution of a corresponding portion of the creation music track.

The waveform data may be selected so that they are related to a particular portion of the music track, preferably near the beginning of the music track and/or near the end of the music track.

If the decision in step e is negative, the mix may be changed to exclude the consumption music track. This will normally be done if it is not possible to adjust the consumption music track to be similar to the creation music track.

The invention further relates to a method of creating a music mix instructions file comprising providing at least one creation music track and including in the mix instructions file control information controlling the playback of the at least one creation music track, further comprising identifying integrity data related to the creation music track and storing said integrity data in association with the mix instructions file. In this way, the waveform data related to the creation music track, to be used in the method of recreating the music mix, can be obtained.

In a preferred embodiment, the step of identifying integrity data comprises performing a beat/waveform analysis of the creation music track and including information from the beat/waveform analysis in the integrity data. The mix instructions file typically already contains musical beat analysis data and waveform data of the creation music track, which can be leveraged to optimize the integrity analysis, in both required data size and computational cost.

The information from the beat/waveform analysis contains information about the entire track, and thus specifically also about the temporal regions around the synchronization points identified in the creation music track. This will facilitate the comparison of a consumption music track with the creation music track, since the comparison may be made for the synchronization points.

The creation method may further comprise identifying the position of at least one transient in the creation music track, and including information about the position in the integrity data. This will make the method faster and more reliable.

The creation method may further comprise providing mix integrity data related to the spectrotemporal energy distribution of a portion of the creation music track including information about the spectrotemporal energy distribution in the integrity data. This will also serve to make the method faster and more reliable.

The invention also relates to computer program products comprising computer readable code means which when run in a computer will cause the computer to perform one of the methods above. The code means may be stored on any type of suitable storage medium, for example a non-transitory storage medium.

The invention also relates to a computer comprising a processor and a program memory comprising a computer program product according to the above.

### Brief Description of the Drawings

The invention will be described in more detail in the following, by way of example and with reference to the appended drawings, in which
Figure 1 illustrates a general overall system for creating, distributing and consuming music mixes.
Figure 2 is a general flow chart of the method of creating a mix instructions file which may be used according to the invention.
Figure 3 is a general flow chart of the method of consuming a mix instructions file, which may be used according to the invention.
Figure 4 illustrates the analysis performed when creating and consuming a music mix, respectively, according to a first embodiment of the invention
Figure 5 illustrates the analysis performed when creating and consuming a music mix, respectively, according to a second embodiment of the invention
Figure 6 illustrates the analysis performed when creating and consuming a music mix, respectively, according to a third embodiment of the invention

### Detailed Description

For clarity, in this document the music tracks used when creating the mix will be referred to as creation tracks or creation music tracks. The music tracks used when playing the mix will be referred to as consumption tracks or consumption music tracks. Similarly, the data used to identify the files will be referred to as creation data/creation metadata and consumption data/consumption metadata, respectively. As will be understood, the creation tracks and the consumption tracks are essentially the same type of track and the same music track may be used both as a creation music track and as a consumption music track.

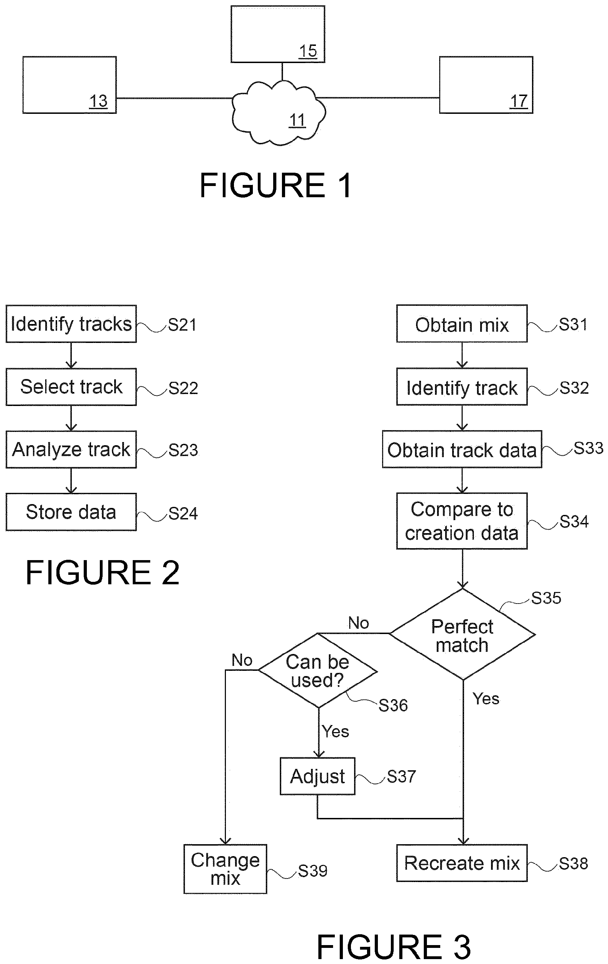

Figure 1 illustrates an overall system including the different parties that may use different parts of the inventive concept. The parties may be connected to each other by any suitable network, for example the Internet as indicated by the network 11 in the Figure. A mix creator will create a music mix using a mixing program run on a first computer 13 and music tracks stored locally on the computer and/or obtained from a music provider, typically accessed through the Internet 11. The mix will be in the form of a mix instructions track comprising references to the creation music tracks but not the music tracks themselves. The mix instructions track will typically be stored on a server 15, from which it can be downloaded by a mix consumer wishing to play the mix using a mix client program on a second computer 17. The mix as played back by the mix consumer should ideally sound exactly like the mix as created by the mix creator. To achieve this, the consumption music tracks used for the playing of the mix should be identical to the creation music tracks used when creating the mix. Since the mix creator 13 and the mix consumer 15 will not necessarily get their music tracks from the same provider, the creation music tracks and the consumption music tracks will not always be identical. In fact, even if the music tracks are obtained from the same provider the creation music track used when creating a mix may have been replaced at a later time, or the tracks provided for a particular music track may differ for different geographical areas.

Figure 2 illustrates a method of analyzing a creation music track. This may be done when the mix is created, or the analysis may be performed at an earlier stage and the result stored for later use. In step S21 a mix instructions file is obtained and at least one of the music tracks used in the mix is identified.

In step S22 a music track is selected among the tracks identified in step S21. The music track may be identified as a music track referenced in a mix instructions track or may be selected for some other reason, that is, step S21 is not compulsory.

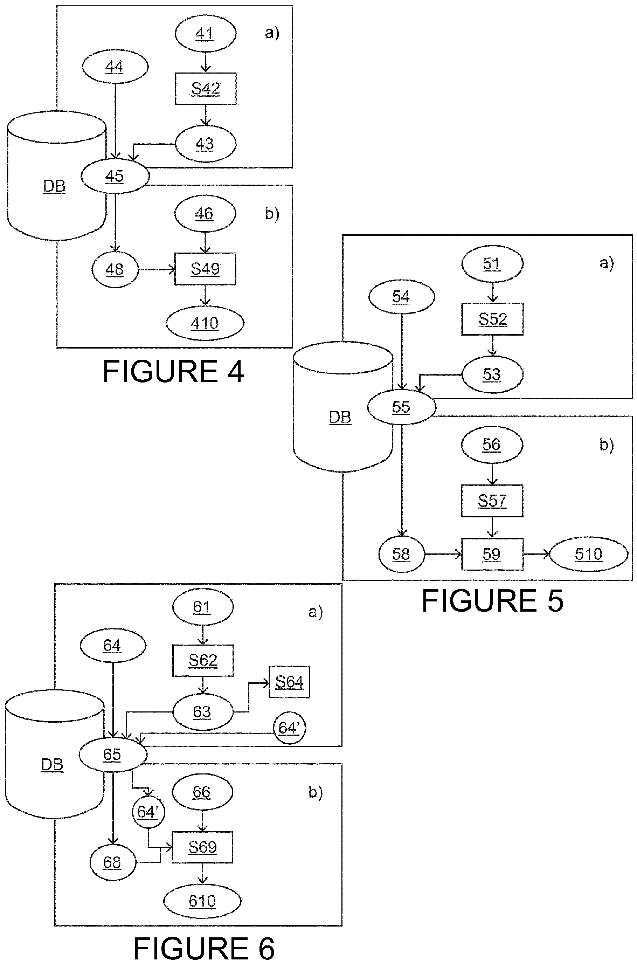

In step S23 the music track is analyzed, for example according to the method illustrated in box a) of any of the Figures 4, 5, and 6, to provide creation data related to the properties of the creation music track. The types of data stored may differ for different embodiments as will be discussed below. Synchronization points are identified in the creation music track, to facilitate the comparison with the consumption music tracks used for recreating the mix, as will be discussed in connection with Figure 3 below.

In step S24 the data obtained in step S23 are stored. The data may be stored or in, or in connection with the mix instructions track, or in a database holding mix integrity data for a number of music tracks, or in connection with the music track to which it relates.

Of course, the music tracks for analysis may be selected in any suitable way. For example, one or more tracks provided by a particular provider may be analyzed even if they are note currently used in a mix, to provide a database of mix integrity data for a number of tracks for future use.

Mix integrity estimation can be made more efficient in computation, storage and bandwidth by utilizing distributed waveform data that have already been obtained for other purposes. According to the invention the waveform data may be kept very small, preferably about 3kb per track

Figure 3 discloses a method that may be performed in a mix client program when a mix is to be recreated, to ensure that an appropriate consumption music track is used, according to embodiments of the present invention.

In a first step S31 a mix instructions file is obtained, typically downloaded from a server for example through the Internet.

In step S32, one or more music tracks used in the mix are identified and creation data for each of the music tracks, as obtained in steps S23 and S24, are obtained. The music tracks may be identified by searching the mix instruction track obtained in step S31 and identifying the creation music tracks used in the mix. There may also be a separate list of the tracks included in the mix. The mix integrity data for each music track may be included in the mix instructions track. Alternatively, it may be provided in some other way, for example from a database holding mix integrity data for a number of music tracks.

In step S33 consumption data are obtained for each consumption music track. The consumption data may be obtained by retrieving each consumption music track and analyzing it or may be fetched from a database holding the data. Alternatively, the consumption data may be provided together with each consumption music track. The synchronization points defined in the creation music track, and the characteristics, such as waveform in these synchronization points, are identified and used to search for similar points in the consumption music track.

In step S34 the consumption data obtained in step S33 and the creation data obtained in step S32 are compared. In step S35 it is determined if the result is a perfect match between the two music tracks or not. If yes, the consumption music track obtained in step S33 is used in the mix, in step S38. If no, the procedure continues with step S36, in which the nature or severity of the differences is determined. If it is determined that the music track may be used in the mix after some adjustments, the procedure continues with step S37, in which the adjustments are determined and applied to the music track. The adjustments typically involve applying the necessary offset in gain and/or time. In step S38 the mix is played back using the consumption music tracks identified and adjusted as needed. If it is determined that the creation music track and the consumption music track are too different, the consumption music track is discarded. In that case, it may be possible to search for another music track offered by the same provider or a different provider. If no sufficiently similar music track can be found, it may be necessary to adapt the mix so that it can be played without the music track, as indicated by step S39.

The new consumption data obtained in step S33 may also be stored for future use, either locally or in a database associated with the music provider. It may also be used together with the creation data to build a database mapping different versions of a music track to each other.

Figure 4 illustrates a method denoted a) of analyzing a creation music track to obtain a set of creation data for the music track, for use, for example in step S22 above. Figure 4 further illustrates a method denoted b) of analyzing a consumption music track for playback of the mix.

In Figure 4 a), a creation audio source denoted 41 is provided and a beat/waveform analysis of the audio source is performed in a step S42 to provide beat/waveform metadata denoted 43 in the drawing. As explained above, the beat/waveform analysis may have been already performed for other purposes, in which case the previously obtained beat/waveform metadata may be used instead of performing step S42 again. The beat/waveform metadata are stored in a database DB together with the mix instructions file 44 or as part of the mix instructions file. Figure 4 shows a file 45 stored in the database DB and comprising both the mix instructions and the beat/waveform metadata.

The beat/waveform metadata 43 typically comprises
- a beat grid, i.e. an array of timings marking the beats of the track
- waveform data, i.e. an array of signal amplitudes for each interval of the track. A suitable time interval may be, for example 100 ms

In step S42, one or more portions of the track are identified. The portions should preferably have the following properties:
- They should have a unique waveform shape, that is, one that is only found once in the track
- They should have a strong and temporally isolated transient
- They should be located near to where the mixing is likely to occur, typically near the beginning or the end of the track. Preferably one portion near the beginning and one portion near the end are identified.

A suitable duration of each portion is 5 - 10 seconds. It is advantageous to find portions that are not too repetitive and/or smooth, to ensure precise and unambiguous estimation of timing.

In subprocess b) of Figure 4, a consumption music track 46 is selected, which should ideally match the music track 41 used in subprocess a). The subprocess b) is performed to determine if the two tracks match well enough that the consumption music track 46 may be used when playing the mix.

The consumption music track 46 is used, together with waveform data 48, which are the same as the waveform data 43, obtained from the mix file 45, as input to a mix integrity estimation step S49. Mix integrity estimation includes estimating the difference in timing and volume between the tracks as well as the similarity in general. Preferably a number of synchronization points have been defined in the creation music track 41, in step S23, to facilitate the comparison. In this step, assuming that the music contents of the two tracks are essentially similar, for example, an offset in timing may be determined so that it can be corrected. Offset in timing and amplitude is estimated by searching for offsets in timing and amplitude that maximize the similarity of the waveforms. The result will be a correction estimate 410, which will determine any adaptations necessary so that the consumption music track 46 will generate the same result as using the creation music track 41. The correction estimate is obtained as outlined by steps S34 - S38.

Figure 5 illustrates an alternative procedure to that of Figure 4. As can be seen, the mix creation analysis subprocess denoted a) is identical to the corresponding subprocess of Figure 4. The mix consumption analysis subprocess denoted b), as in Figure 4, involves selecting an audio source 56, that is, a consumption music track. A beat/waveform analysis of the consumption music track is performed in step S57. The beat grid obtained in step S57 is used to determine synchronization points to make the comparison between the music tracks more precise. Subsequently, the mix integrity estimation S59 is performed on the consumption music track in the same way as in Figure 4. Input data to the mix integrity estimation in this embodiment are the waveform data 58 and the synchronization points resulting from the beat/waveform analysis S57. As mentioned above, the algorithm searches for points in the consumption music track that are similar, or identical to the synchronization points defined in the creation music tracks. The detected offset in time is used to correct the timing of the tracks in the playback of the mix. Similarly, a detected change in amplitude gain is corrected during playback. The correction estimate is obtained as outlined by steps S34 - S38.

Because of the additional step of performing a beat/waveform analysis in the consumption subprocess, the method according to Figure 5 will be more accurate, but also slower, than the method according to Figure 4.

Figure 6 illustrates a third possible procedure. In this embodiment, like the ones shown in Figures 4 and 5, in subprocedure a) a mix creation music track 61 is provided for beat/waveform analysis S62 and the resulting beat/waveform metadata 63 similar to those in 43 and 53, respectively are stored in the database. In addition to this, the mix creation music track 61 and the beat/waveform metadata are used to perform a mix integrity analysis S64, which will result in mix integrity data 64' that are stored in the database along with the beat/waveform metadata.

The mix integrity data 64' comprise a high-precision timing of the strongest transient in the portion (e.g. sub-millisecond resolution). Optionally the mix integrity data may also comprise a spectrogram or some other type of spectrotemporal description of the portion. The spectrogram will enable a coarse but robust estimate of timing, while the transient will give exact but ambiguous estimate. because there can be several transients. These two can be combined, into a single estimate that is both robust and exact.

The transient detection may be implemented in any suitable way, as long as the same method is used by the MI creator as the consumer. A straight-forward approach would be to trace amplitude envelopes in audio sub-bands, sum those, and apply a high-pass filters to that sum. The peak with the maximum amplitude in that resulting signal is registered as the strongest transient, and the timing of that peak is registered as the temporal position of the transient.

In subprocedure b) of Figure 6, as in Figures 4 and 5, a consumption music track 66 is provided and a mix integrity estimation S69 is performed. The input to the mix integrity estimation S69 is the consumption music track 66, the mix integrity data 64' obtained in subprocedure a), and waveform data 68. The correction estimate is obtained as outlined by steps S34 - S38. Experiments using artificial track differences have shown that this method can estimate timing with sub-millisecond accuracy.

Because of the additional data provided in subprocedure a) as mix integrity analysis data, the embodiment of Figure 6 provides an analysis method that is both fast and accurate in subprocess b).

## Claims

1. A computer-based method of recreating a music mix based on a mix instructions file, wherein the mix instructions file comprises information identifying at least one creation music track used when creating the mix instructions file, waveform data related to the creation music track, and control information controlling the playback of the at least one creation music track, said method comprising
a. Providing a consumption audio music track to be controlled by the control information
b. Obtaining waveform data related to the consumption music track
c. Comparing waveform data related to the consumption music track to the waveform data related to the creation music track
d. Depending on the result of the comparison, deciding whether to use the consumption music track when reconstructing the music mix,
e. If the decision in step d is positive, reconstructing the music mix by applying the control information to the consumption music track.

2. A method according to claim 1, further comprising
a. Determining an adjustment of timing and/or gain to be applied to the consumption music track to compensate for a difference between the creation music track and the consumption music track
b. Applying the adjustment to the consumption music track when reconstruction the music mix

3. A method according to any one of the preceding claims, wherein the mix instructions file comprises information about at least one synchronization point defined for the creation music track and the method comprises the step of searching for at least one point in the consumption music track that is similar to the at least one synchronization point in the creation music track.

4. A method according to any one of the preceding claims, wherein the comparison of the waveform data further includes providing mix integrity data related to the position of at least one transient in the creation music track, identifying a corresponding transient in the consumption music track and comparing the positions of the transient in the two music tracks.

5. A method according to any one of the preceding claims, wherein the comparison of the waveform data further includes providing mix integrity data related to the spectrotemporal energy distribution of a portion of the creation music track and comparing it to the spectrotemporal energy distribution of a corresponding portion of the creation music track.

6. A method according to any one of the preceding claims, wherein the waveform data are related to a particular portion of the music track, preferably near the beginning of the music track and/or near the end of the music track.

7. A method according to any one of the preceding claims, comprising the step of, if the decision in step d is negative, changing the mix to exclude the consumption music track.

8. A method of creating a music mix instructions file comprising providing at least one creation music track and including in the mix instructions file control information controlling the playback of the at least one creation music track, further comprising identifying integrity data related to the creation music track and storing said integrity data in association with the mix instructions file.

9. A method according to claim 8, wherein the step of identifying integrity data comprises performing a beat/waveform analysis of the creation music track and including information from the beat/waveform analysis in the integrity data.

10. A method according to claim 8 or 9, wherein the information from the beat/waveform analysis comprises information about one or more synchronization points identified in the creation music track.

11. A method according to any one of the claims 8 - 10, further comprising identifying the position of at least one transient in the creation music track, and including information about the position in the integrity data.

12. A method according to any one of the claims 8 - 11, further comprising providing mix integrity data related to the spectrotemporal energy distribution of a portion of the creation music track including information about the spectrotemporal energy distribution in the integrity data.

13. A computer program product comprising computer readable code means which, when run in a computer will cause the computer to perform the method according to any one of the preceding claims.

14. A computer system comprising a computer program product according to claim 13.

## Patentansprüche

1. Computerbasiertes Verfahren zum Wiederherstellen einer Musikmischung basierend auf einer Mischanweisungsdatei, wobei die Mischanweisungsdatei Informationen, welche mindestens eine Erzeugungsmusikspur identifizieren, die beim Erzeugen der Mischanweisungsdatei verwendet wird, Wellenformdaten in Bezug auf die Erzeugungsmusikspur und Steuerinformationen umfasst, welche die Wiedergabe der mindestens einen Erzeugungsmusikspur steuern, das Verfahren umfassend
a. Bereitstellen einer Verbrauchsaudiomusikspur, die durch die Steuerinformationen gesteuert werden soll
b. Erhalten von Wellenformdaten in Bezug auf die Verbrauchsmusikspur
c. Vergleichen von Wellenformdaten in Bezug auf die Verbrauchsmusikspur mit den Wellenformdaten in Bezug auf die Erzeugungsmusikspur
d. Abhängig vom Ergebnis des Vergleichs, Entscheiden, ob die Verbrauchsmusikspur beim Rekonstruieren der Musikmischung verwendet werden soll
e. Wenn die Entscheidung in Schritt d positiv ist, Rekonstruieren der Musikmischung durch Anwenden der Steuerinformationen auf die Verbrauchsmusikspur.

2. Verfahren nach Anspruch 1, ferner umfassend
a. Bestimmen einer Einstellung eines Zeitpunkts und/oder einer Verstärkung, die auf die Verbrauchsmusikspur angewendet werden soll, um eine Differenz zwischen der Erzeugungsmusikspur und der Verbrauchsmusikspur zu kompensieren
b. Anwenden der Einstellung auf die Verbrauchsmusikspur beim Rekonstruieren der Musikmischung

3. Verfahren nach einem der vorstehenden Ansprüche, wobei die Mischanweisungsdatei Informationen über mindestens einen Synchronisierungspunkt umfasst, der für die Erzeugungsmusikspur definiert ist, und das Verfahren den Schritt des Suchens nach mindestens einem Punkt in der Verbrauchsmusikspur, der dem mindestens einen Synchronisierungspunkt in der Erzeugungsmusikspur ähnlich ist, umfasst.

4. Verfahren nach einem der vorstehenden Ansprüche, wobei der Vergleich der Wellenformdaten ferner ein Bereitstellen von Mischintegritätsdaten in Bezug auf die Position mindestens eines Übergangs in der Erzeugungsmusikspur, Identifizieren eines entsprechenden Übergangs in der Verbrauchsmusikspur und Vergleichen der Positionen des Übergangs in den zwei Musikspuren einschließt.

5. Verfahren nach einem der vorstehenden Ansprüche, wobei der Vergleich der Wellenformdaten ferner ein Bereitstellen von Mischintegritätsdaten in Bezug auf die spektrotemporale Energieverteilung eines Abschnitts der Erzeugungsmusikspur und Vergleichen dieser mit der spektrotemporalen Energieverteilung eines entsprechenden Abschnitts der Erzeugungsmusikspur einschließt.

6. Verfahren nach einem der vorstehenden Ansprüche, wobei sich die Wellenformdaten auf einen bestimmten Abschnitt der Musikspur, vorzugsweise nahe dem Beginn der Musikspur und/oder nahe dem Ende der Musikspur, beziehen.

7. Verfahren nach einem der vorstehenden Ansprüche, umfassend den Schritt, wenn die Entscheidung in Schritt d negativ ist, des Änderns der Mischung, um die Verbrauchsmusikspur auszuschließen.

8. Verfahren zum Erzeugen einer Musikmischanweisungsdatei, umfassend ein Bereitstellen von mindestens einer Erzeugungsmusikspur und Einschließen der Mischanweisungsdateisteuerinformationen, die die Wiedergabe der mindestens einen Erzeugungsmusikspur steuern, ferner umfassend ein Identifizieren von Integritätsdaten in Bezug auf die Erzeugungsmusikspur und Speichern der Integritätsdaten in Verbindung mit der Mischanweisungsdatei.

9. Verfahren nach Anspruch 8, wobei der Schritt des Identifizierens von Integritätsdaten ein Durchführen einer Takt-/Wellenformanalyse der Erzeugungsmusikspur und Einschließen von Informationen aus der Takt-/Wellenformanalyse in die Integritätsdaten umfasst.

10. Verfahren nach Anspruch 8 oder 9, wobei die Informationen aus der Takt-/Wellenformanalyse Informationen über einen oder mehrere Synchronisationspunkte, die in der Erzeugungsmusikspur identifiziert werden, umfassen.

11. Verfahren nach einem der Ansprüche 8 bis 10, ferner umfassend ein Identifizieren der Position mindestens eines Übergangs in der Erzeugungsmusikspur und Einschließen von Informationen über die Position in die Integritätsdaten.

12. Verfahren nach einem der Ansprüche 8 bis 11, ferner umfassend ein Bereitstellen von Mischintegritätsdaten in Bezug auf die spektrotemporale Energieverteilung eines Abschnitts der Erzeugungsmusikspur, einschließlich Informationen über die spektrotemporale Energieverteilung in den Integritätsdaten.

13. Computerprogrammprodukt, umfassend ein computerlesbares Codemittel, das bei Ausführung in einem Computer den Computer dazu veranlasst, das Verfahren nach einem der vorstehenden Ansprüche durchzuführen.

14. Computersystem, umfassend ein Computerprogrammprodukt nach Anspruch 13.

## Revendications

1. Procédé informatique de recréation d'un mixage musical sur la base d'un fichier d'instructions de mixage, dans lequel le fichier d'instructions de mixage comprend des informations identifiant au moins une piste musicale de création utilisée lors de la création du fichier d'instructions de mixage, des données de forme d'onde se rapportant à la piste musicale de création, et des informations de commande commandant la lecture de l'au moins une piste musicale de création, ledit procédé comprenant
a. la fourniture d'une piste musicale audio de consommation à commander par les informations de commande
b. l'obtention de données de forme d'onde se rapportant à la piste musicale de consommation
c. la comparaison de données de forme d'onde se rapportant à la piste musicale de consommation aux données de forme d'onde se rapportant à la piste musicale de création
d. en fonction du résultat de la comparaison, la décision quant à savoir s'il faut utiliser la piste musicale de consommation lors de la reconstruction du mixage musical,
e. si la décision à l'étape d est positive, la reconstruction du mixage musical en appliquant les informations de commande à la piste musicale de consommation.

2. Procédé selon la revendication 1, comprenant en outre
a. la détermination d'un ajustement de temporisation et/ou d'un gain à appliquer à la piste musicale de consommation pour compenser une différence entre la piste musicale de création et la piste musicale de consommation
b. l'application de l'ajustement à la piste musicale de consommation lors de la reconstruction du mixage musical

3. Procédé selon l'une quelconque des revendications précédentes, dans lequel le fichier d'instructions de mixage comprend des informations concernant au moins un point de synchronisation défini pour la piste musicale de création et le procédé comprend l'étape consistant à rechercher au moins un point dans la piste musicale de consommation qui est similaire à l'au moins un point de synchronisation dans la piste musicale de création.

4. Procédé selon l'une quelconque des revendications précédentes, dans lequel la comparaison des données de forme d'onde inclut en outre la fourniture de données d'intégrité de mixage se rapportant à la position d'au moins une transition dans la piste musicale de création, l'identification d'une transition correspondante dans la piste musicale de consommation et la comparaison des positions de la transition dans les deux pistes musicales.

5. Procédé selon l'une quelconque des revendications précédentes, dans lequel la comparaison des données de forme d'onde inclut en outre la fourniture de données d'intégrité de mixage se rapportant à la distribution d'énergie spectrotemporelle d'une partie de la piste musicale de création et sa comparaison à la distribution d'énergie spectrotemporelle d'une partie correspondante de la piste musicale de création.

6. Procédé selon l'une quelconque des revendications précédentes, dans lequel les données de forme d'onde se rapportent à une partie particulière de la piste musicale, de préférence près du début de la piste musicale et/ou près de la fin de la piste musicale.

7. Procédé selon l'une quelconque des revendications précédentes, comprenant l'étape, si la décision à l'étape d est négative, consistant à changer le mixage pour exclure la piste musicale de consommation.

8. Procédé de création d'un fichier d'instructions de mixage musical comprenant la fourniture d'au moins une piste musicale de création et l'inclusion dans le fichier d'instructions de mixage d'informations de commande commandant la lecture de l'au moins une piste musicale de création, comprenant en outre l'identification de données d'intégrité se rapportant à la piste musicale de création et le stockage desdites données d'intégrité en association avec le fichier d'instructions de mixage.

9. Procédé selon la revendication 8, dans lequel l'étape d'identification de données d'intégrité comprend la mise en œuvre d'une analyse de rythme/forme d'onde de la piste musicale de création et l'inclusion d'informations provenant de l'analyse de rythme/forme d'onde dans les données d'intégrité.

10. Procédé selon la revendication 8 ou 9, dans lequel les informations provenant de l'analyse de rythme/forme d'onde comprennent des informations concernant un ou plusieurs points de synchronisation identifiés dans la piste musicale de création.

11. Procédé selon l'une quelconque des revendications 8 à 10, comprenant en outre l'identification de la position d'au moins une transition dans la piste musicale de création, et l'inclusion d'informations concernant la position dans les données d'intégrité.

12. Procédé selon l'une quelconque des revendications 8 à 11, comprenant en outre la fourniture de données d'intégrité de mixage se rapportant à la distribution d'énergie spectrotemporelle d'une partie de la piste musicale de création incluant des informations concernant la distribution d'énergie spectrotemporelle dans les données d'intégrité.

13. Produit programme informatique comprenant un moyen de code lisible par ordinateur qui, lorsqu'il est exécuté dans un ordinateur amènera l'ordinateur à mettre en œuvre le procédé selon l'une quelconque des revendications précédentes.

14. Système informatique comprenant un produit programme informatique selon la revendication 13.
